# EUROPEAN PATENT APPLICATION

(11) **EP 3 715 543 A1**
(43) Date of publication of application: **30.09.2020**
(21) Application number: 20165676.6
(22) Date of filing: 25.03.2020
(51) Int. Cl.: E03C 1/05

(54) **SWITCHING STRUCTURE WITH ELECTRONIC WATER DISCHARGE MODE AND MECHANICAL WATER DISCHARGE MODE AND WATER OUTLET FAUCET**

(30) Priority: 25.03.2019 CN 201920380988 U
(71) Applicant: Xiamen Solex High-Tech Industries Co., Ltd., 361022 Xiamen, Fujian (CN)
(72) Inventor: CHEN, Huarong, Xiamen, Fujian 361022 (CN); XIONG, Wenjing, Xiamen, Fujian 361022 (CN)
(74) Representative: Hamel, Armin

(57) **Abstract**

The present disclosure provides a switching structure with an electronic water discharge mode and a mechanical water discharge mode. The switching structure comprises an electronic valve, a mechanical valve, a control module for controlling the electronic valve, an operation handle for controlling the mechanical valve, and a switching member for switching between the electronic water discharge mode and the mechanical water discharge mode. The electronic valve and the mechanical valve are connected in series between a water outlet and a water inlet. The switching member outputs a mechanical water discharge mode signal or an electronic water discharge mode signal to the control module. When the switching member is in the electronic water discharge mode, the control module sends a control signal to control the electronic valve to open after having received a water discharge command. When the switching member is in the mechanical water discharge mode, the control module sends a control signal to control the electronic valve to stay open. The preset disclosure provides the switching structure with the electronic water discharge mode and the mechanical water discharge mode that the water outlet terminal can be switched between the electronic water discharge mode and the mechanical water discharge mode.

## Description

### RELATED APPLICATIONS

This application claims priority to Chinese Patent Application 201920380988.7, filed on March 25, 2019. Chinese Patent Application 2019203809887 is incorporated herein by reference.

### FIELD OF THE DISCLOSURE

The preset disclosure relates to a switching structure, and in particular relates to a water discharging switching structure.

### BACKGROUND OF THE DISCLOSURE

Nowadays, there are many electronic faucets on the market, which rely on touch sensing or infrared sensing to open an electromagnetic valve for water discharge. Such faucets generally do not have a mechanical water discharge mode, so once the touch sensing module or the infrared sensing module fails, the entire faucet is unusable. As this kind of faucet is widely used in shopping malls, airports, and other high traffic areas, it is inconvenient if the faucet is unavailable. Therefore, if the faucet can be switched between an electronic water discharge mode and a mechanical water discharge mode, the faucet can effectively avoid the disadvantage that the entire faucet cannot be used when the electronic water discharge fails.

### BRIEF SUMMARY OF THE DISCLOSURE

The main technical problem to be solved by the present disclosure is to provide a switching structure with an electronic water discharge mode and a mechanical water discharge mode, so that a water outlet terminal can be switched between two water discharge modes: electronic water discharge mode and mechanical water discharge mode.

In order to solve the above technical problems, the present disclosure provides a switching structure with an electronic water discharge mode and a mechanical water discharge mode. The switching structure comprises an electronic valve, a mechanical valve, a control module for controlling the electronic valve, an operation handle for controlling the mechanical valve, and a switching member for switching between the electronic water discharge mode and the mechanical water discharge mode.

The electronic valve and the mechanical valve are connected in series between a water outlet and a water inlet. The switching member outputs a mechanical water discharge mode signal or an electronic water discharge mode signal to the control module.

When the switching member is in the electronic water discharge mode, the control module sends a first control signal to control the electronic valve to open after having received a water discharge command. When the switching member is in the mechanical water discharge mode, the control module sends a second control signal to control the electronic valve to stay open.

In another preferred embodiment, the water discharge command is a touch water discharge command, an induction water discharge command, or a wireless water discharge command.

In another preferred embodiment, the electronic valve is an electromagnetic valve.

In another preferred embodiment, the control module comprises a control box and a circuit board which is disposed in the control box, and a signal output terminal of the circuit board is connected to the electromagnetic valve.

In another preferred embodiment, the switching member is a button disposed on the control box and connected to a mode switching signal input terminal of the circuit board.

In another preferred embodiment, the mechanical valve comprises a cold water inlet, a hot water inlet, and a mixed water outlet. The mixed water outlet is connected to a water inlet of the electronic valve.

In another preferred embodiment, after the switching member is switched to the electronic water discharge mode, the switching member outputs the electronic water discharge mode signal to the control module so that the control module is maintained in the electronic water discharge mode, the control module sends the first control signal to control the electronic valve to open after having received the water discharge command.

In another preferred embodiment, after the switching member is switched to the mechanical water discharge mode, the switching member outputs the mechanical water discharge mode signal to the control module so that the control module enters into the electronic water discharge mode, the control module sends the second control signal to control the electronic valve to stay open.

In another preferred embodiment, when the switching member is in the electronic water discharge mode, the mechanical valve stays open.

The present disclosure further provides a water outlet faucet comprises the switching structure with the electronic water discharge mode and the mechanical water discharge mode according to above mentioned.

Compared with the prior art, the technical solution of the present disclosure has the following beneficial effects:

The preset disclosure provides a switching structure with an electronic water discharge mode and a mechanical water discharge mode. In the mechanical water discharge mode, the electronic valve is always in an open state, so that a user only needs to operate the operation handle to control the water outlet terminal to discharge water. In this way, even if a sensor module fails, the user can switch to the mechanical water discharge mode to ensure that the water outlet terminal can discharge water as normal. In the electronic water discharge mode, as long as the operation handle is placed in an open position, water can be discharged by touch or infrared induction as with an ordinary electronic faucet. The addition of the mechanical water discharge mode does not cause any inconvenience to the normal use of the water outlet.

### BRIEF DESCRIPTION OF THE DRAWING

FIG. 1 is a schematic view of a waterway of a first embodiment of the present disclosure;
FIG. 2 is a cross-sectional view of a control module in the first embodiment of the present disclosure;
FIG. 3 is an external view of a faucet in the first embodiment of the present disclosure; and
FIG. 4 is an exploded view of the faucet in the first embodiment of the present disclosure.

### DETAILED DESCRIPTION OF THE EMBODIMENTS

In order to make the technical solution of the present disclosure more clear, the present disclosure will be further described in conjunction with the embodiments and the accompanying drawings.

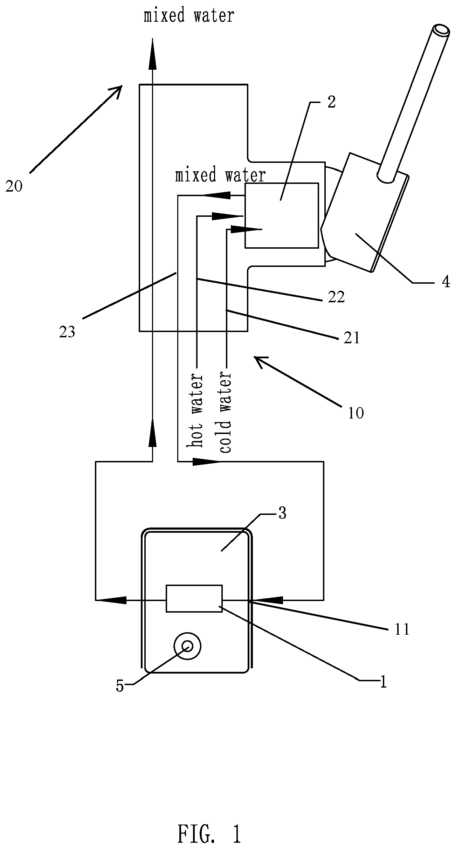

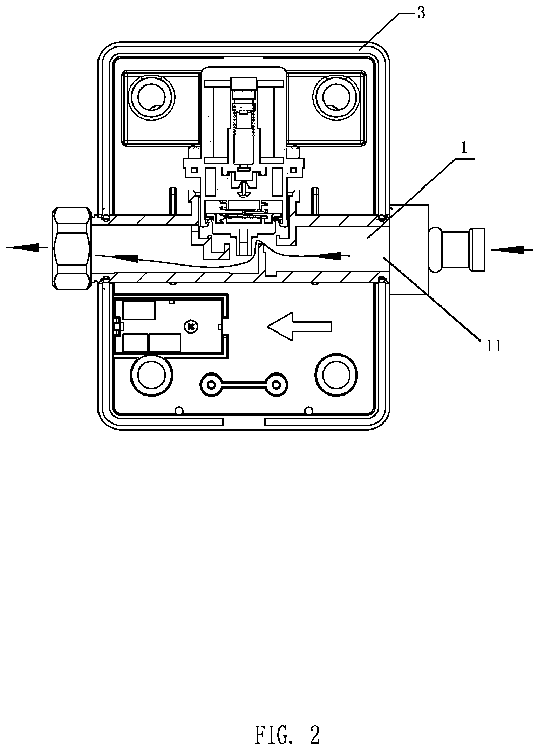

Referring to FIG. 1 and FIG. 2, a switching structure with an electronic water discharge mode and a mechanical water discharge mode comprises an electronic valve 1, a mechanical valve 2, a control module 3 for controlling the electronic valve 1, an operation handle 4 for controlling the mechanical valve 2, and a switching member 5 for switching between the electronic water discharge mode and the mechanical water discharge mode.

The electronic valve 1 and the mechanical valve 2 are connected in series between a water outlet 10 and a water inlet 20. The switching member 5 outputs a mechanical water discharge mode signal or an electronic water discharge mode signal to the control module 3.

When the switching member 5 is in the electronic water discharge mode, the control module 3 sends a first control signal to control the electronic valve 1 to open after having received a water discharge command. When the switching member 5 is in the mechanical water discharge mode, the control module 3 sends a second control signal to control the electronic valve 1 to stay open.

Therefore, in the mechanical water discharge mode, the electronic valve 1 does not actually act. The user only needs to operate the operation handle 4 to control a water outlet terminal to discharge water. In the electronic water discharge mode, the user only needs to keep the operation handle 4 in the open state, so that the mechanical valve 2 does not act. The water outlet terminal functions as an ordinary electronic faucet, and the user can use it normally. In this way, even if a sensor module fails, the user can switch to the mechanical water discharge mode to ensure that the water outlet terminal can discharge water as normal. In the electronic water discharge mode, as long as the operation handle 4 is placed in an open position, the water can be discharged by touch or infrared induction as with an ordinary electronic water outlet terminal. The addition of the mechanical water discharge mode does not cause any inconvenience to the normal use of the water outlet terminal.

In this embodiment, the water discharge command is a touch water discharge command, an induction water discharge command, or a wireless water discharge command. Only a touch module, an infrared module, or a wireless module, respectively, needs to be disposed in the water outlet terminal. The touch module, the infrared module, and the wireless module are conventional and are not within the scope of protection for the present disclosure, so the structure of the touch module, the infrared module, and the wireless module will not be excessively expanded upon hereafter.

In practical applications, a power supply is required to ensure normal operation for the touch module or the infrared module, the electronic valve 1, and the switching member 5. Therefore, a battery is required. If power stored in the battery is depleted, it will cause the touch module or the infrared module to fail. The switching member 5 or the electronic valve 1 will also be disabled, resulting in the user being unable to switch from the electronic water discharge mode to the mechanical water discharge mode. In order to solve this problem, in this embodiment, when the power stored in the battery is not sufficient to support the touch module or the infrared module to operate normally, the system reserves a portion of the power stored in the battery to ensure that the electronic valve 1 and the switching member 5 can still operate normally in the future. In this way, the user can switch the electronic water discharge mode to the mechanical water discharge mode for a period of time after the touch module or the infrared module fails due to insufficient power.

In this embodiment, the electronic valve 1 is an electromagnetic valve. Those skilled in the art can also use other electronic valves as desired, which is a simple replacement of the embodiment.

The control module 3 comprises a control box 31 and a circuit board 32 disposed in the control box. A signal output terminal of the circuit board 32 is connected to the electromagnetic valve. This allows the circuit board 32 to control the electromagnetic valve to open or close. The switching member 5 is a button disposed on the control box 31 and connected to a mode switching signal input terminal of the circuit board 32. Therefore, it is very simple to complete the mode switching operation by pressing the button.

In this embodiment, the mechanical valve 2 comprises a cold water inlet 21, a hot water inlet 22, and a mixed water outlet 23. The mixed water outlet 23 is connected to a water inlet 11 of the electronic valve 1. Thereby, a series connection of the mechanical valve 2 and the electronic valve 1 is formed. If the water outlet terminal is always discharging cold water, the mechanical valve 2 can instead have only one inlet and one outlet. This is also a very simple alternative. These kinds of mechanical valves 2 widely exist in the prior art, and the internal structure thereof is not within the scope of protection for the present disclosure and will not be excessively expanded upon hereafter.

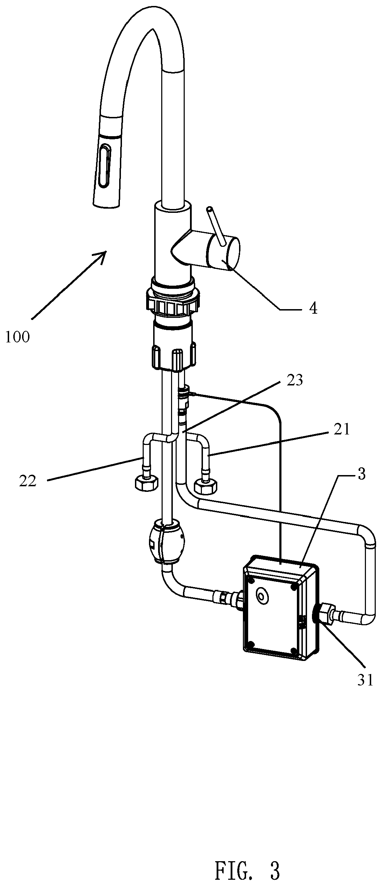

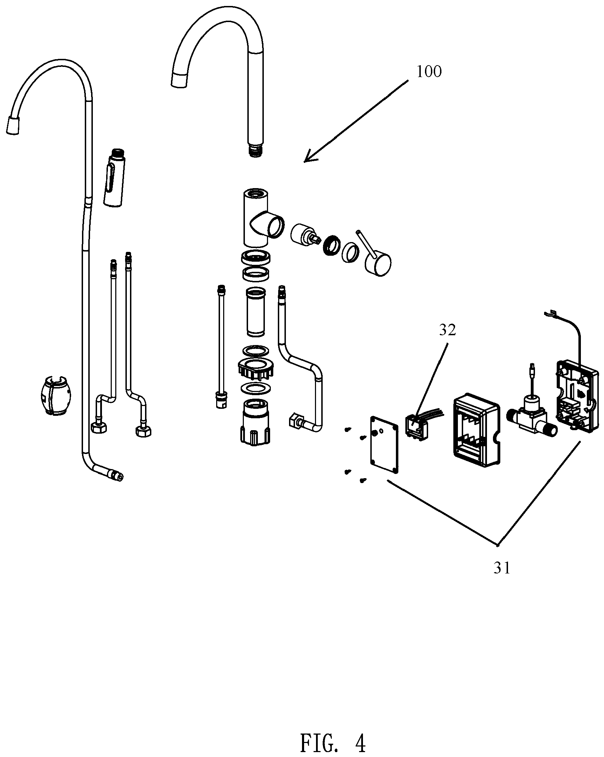

With further reference to FIG. 3 and FIG. 4, the present disclosure also provides a water outlet faucet 100 with the switching structure with the electronic water discharge mode and the mechanical water discharge mode as described above. The structure of the other parts of the water outlet faucet belongs to the prior art, and while shown in detail in FIG. 4, will not be excessively expanded upon hereafter.

In some embodiments, after the switching member 5 is switched to the electronic water discharge mode, the switching member 5 outputs the electronic water discharge mode signal to the control module 3 so that the control module 3 is maintained in the electronic water discharge mode, and the control module 3 sends the first control signal to control the electronic valve 1 to open after having received the water discharge command.

In some embodiments, after the switching member 5 is switched to the mechanical water discharge mode, the switching member 5 outputs the mechanical water discharge mode signal to the control module 3 so that the control module 3 enters into the electronic water discharge mode, and the control module 3 sends the second control signal to control the electronic valve 1 to stay open.

In some embodiments, when the switching member 5 is in the electronic water discharge mode, the mechanical valve 2 stays open.

In this embodiment, the water outlet faucet is a pull-out kitchen faucet. According to actual needs, it can also be changed to a non-pulling kitchen faucet, a pull-out bathroom faucet, or a non-pulling type bathroom faucet.

It will be apparent to those skilled in the art that various modifications and variation can be made in the present disclosure without departing from the spirit or scope of the disclosure. Thus, it is intended that the present disclosure cover the modifications and variations of this disclosure provided they come within the scope of the appended claims and their equivalents.

## Claims

1. A switching structure with an electronic water discharge mode and a mechanical water discharge mode, **characterized in that** the switching structure comprises:
an electronic valve (1),
a mechanical valve (2),
a control module (3) for controlling the electronic valve (1),
an operation handle (4) for controlling the mechanical valve (2), and
a switching member (5) for switching between the electronic water discharge mode and the mechanical water discharge mode,
the electronic valve (1) and the mechanical valve (2) are connected in series between a water outlet (10) and a water inlet (20),
the switching member (5) outputs a mechanical water discharge mode signal or an electronic water discharge mode signal to the control module (3),
when the switching member (5) is in the electronic water discharge mode, the control module (3) sends a first control signal to control the electronic valve (1) to open after having received a water discharge command, and
when the switching member (5) is in the mechanical water discharge mode, the control module sends a second control signal to control the electronic valve (1) to stay open.

2. The switching structure with the electronic water discharge mode and the mechanical water discharge mode according to claim 1, **characterized in that** the water discharge command is a touch water discharge command, an induction water discharge command, or a wireless water discharge command.

3. The switching structure with the electronic water discharge mode and the mechanical water discharge mode according to claim 1 or 2, **characterized in that** the electronic valve (1) is an electromagnetic valve.

4. The switching structure with the electronic water discharge mode and the mechanical water discharge mode according to claim 3, **characterized in that**
the control module (3) comprises a control box (31) and a circuit board (32) which is disposed in the control box (31), and
a signal output terminal of the circuit board (32) is connected to the electromagnetic valve.

5. The switching structure with the electronic water discharge mode and the mechanical water discharge mode according to claim 4, **characterized in that** the switching member (5) is a button disposed on the control box (31) and connected to a mode switching signal input terminal of the circuit board (32).

6. The switching structure with the electronic water discharge mode and the mechanical water discharge mode according to any one of claims 1-5, **characterized in that**
the mechanical valve (2) comprises a cold water inlet (21), a hot water inlet (22), and a mixed water outlet (23), wherein
the mixed water outlet (23) is connected to a water inlet (11) of the electronic valve (1).

7. A water outlet faucet comprising the switching structure with the electronic water discharge mode and the mechanical water discharge mode according to claim 6.

8. A water outlet faucet comprising the switching structure with the electronic water discharge mode and the mechanical water discharge mode according any one of claims 1-5.

9. The switching structure with the electronic water discharge mode and the mechanical water discharge mode according to claim 1, **characterized in that**
after the switching member (5) is switched to the electronic water discharge mode
the switching member (5) outputs the electronic water discharge mode signal to the control module (3) so that the control module (3) is maintained in the electronic water discharge mode, and
the control module (3) sends the first control signal to control the electronic valve (1) to open after having received the water discharge command.

10. The switching structure with the electronic water discharge mode and the mechanical water discharge mode according to claim 1, **characterized in that**
after the switching member (5) is switched to the mechanical water discharge mode
the switching member (5) outputs the mechanical water discharge mode signal to the control module (3) so that the control module (3) enters into the electronic water discharge mode, and
the control module (3) sends the second control signal to control the electronic valve (1) to stay open.

11. The switching structure with the electronic water discharge mode and the mechanical water discharge mode according to claim 1, **characterized in that**
when the switching member (5) is in the electronic water discharge mode, the mechanical valve (2) stays open.
